# EUROPÄISCHE PATENTSCHRIFT

(11) **EP 3 207 784 B1**
(45) Veröffentlichungstag und Bekanntmachung des Hinweises auf die Patenterteilung: **17.07.2019**
(21) Anmeldenummer: 17154917.3
(22) Anmeldetag: 07.02.2017
(51) Int. Cl.: A01C 5/06

(54) **SAATGUTANDRUCKROLLE**
SEED FIRMING WHEEL
ROUE DE TASSEMENT DE GRAINES

(30) Priorität: 16.02.2016 DE 102016102673
(43) Veröffentlichungstag der Anmeldung: 23.08.2017
(73) Patentinhaber: Horsch Maschinen GmbH, 92421 Schwandorf (DE)
(72) Erfinder: HASELHOFF, Alexander, 92421 Schwandorf (DE)
(74) Vertreter: Benninger, Johannes

(56) Entgegenhaltungen:
- EP-A1- 2 982 229
- CA-A1- 2 206 883
- US-A- 4 619 331
- US-A- 5 611 292
- US-A1- 2010 107 946

## Beschreibung

Die vorliegende Erfindung betrifft eine Saatgutandruckrolle mit den Merkmalen des unabhängigen Anspruchs 1.

Derartige Saatgutandruckrollen finden insbesondere in landwirtschaftlichen Sämaschinen Verwendung. Eine derartige Sämaschine mit Saatgutandruckrolle ist u.a. aus der EP 1 461 988 B1 bereits bekannt. Um einen sicheren Eigenantrieb, eine möglichst große Walkarbeit mit Selbstreinigung und eine gute Einbettung des Saatgutes in die Säfurche zu erreichen, ist vorgesehen, dass das Breiten - Höhenverhältnis von Lauffläche zu Seitenflanke mindestens 1:2, vorzugsweise 1: >3 beträgt, wobei die Wandstärken der Saatgutandruckrolle jeweils gleich sind.

Eine Sämaschine in Form einer Einzelkornsämaschine mit Saatgutandruckrolle ist zudem durch die WO 2011/119 095 A1 offenbart. Bei dieser Saatgutandruckrolle weisen die Seitenwände sowie die Lauffläche unterschiedliche Wandstärken auf. Hierdurch soll die Anpresskraft der Saatgutandruckrolle im Bereich der Lauffläche entsprechend erhöht werden, während gleichzeitig die Walkeigenschaften durch die dünnen Seitenwände noch ausreichend sein sollen, ohne hierzu zusätzliche Hilfsmittel zu benötigen.

Bei den aus dem Stand der Technik bekannten Saatgutandruckrollen hängen sowohl die Walkeigenschaften als auch die Anpresskräfte jeweils von den Materialeigenschaften sowie den Wandstärken der Rolle ab. Dies setzt teilweise aufwendige Fertigungsverfahren sowie teure Materialien voraus. Auch können die Eigenschaften nicht geändert werden und somit die Eigenschaften der Saatgutandruckrolle nicht an die jeweiligen Bodenbedingungen angepasst werden. Ebenso benötigen zwar die Seitwände aufgrund der Walkeigenschaften keine Abstreifer, es hat sich jedoch in der Praxis gezeigt, dass sich insbesondere an der Lauffläche trotzdem Erde aufbaut, welche abgestreift werden muss. Eine exakte Einstellung der Abstreifer bei aus Gummi- oder Kunststoff gefertigten Saatgutandruckrollen ist jedoch äußerst schwierig. Ebenso weisen derartige Saatgutandruckrollen fertigungsbedingt Nähte oder Kanten in Fahrrichtung auf, an welchen wiederum Erde leichter haften bleibt und welche eine exakte Einstellung eines Abstreifers erschweren bzw. nicht ermöglichen ohne diese zu beschädigen.

Eine weitere Ausführungsform einer Saatgutandruckrolle geht aus der EP 0 404 241 B1 hervor. Das Pressrad bzw. die Saatgutandruckrolle ist vorzugsweise aus Stahl oder Hartgummi gefertigt. Durch eine derartige Ausgestaltung der Saatgutandruckrolle, ließe sich zwar zum einen die Montage eines Abstreifers vereinfachen, jedoch weisen derartige Saatgutandruckrollen den Nachteil auf, dass diese federnd gelagert werden müssen, um Beschädigungen durch Stöße und Schläge oder beim Ausweichen von Gegenständen zu verhindern. Derartige federnde Lagerungen sind jedoch aufwendig und kostenintensiv. Zudem benötigen diese in der Regel einen relativ großen Einbauraum.

Durch die EP 0 201 047 A2 ist eine Drillmaschine offenbart, welche Säschare mit zumindest zwei getrennten Ein- und Ausläufen für zwei verschiedene Materialien sowie hinter den Säscharen angeordnete Tiefenführungsrädern bzw. Druckrollen umfasst. Die Druckrolle weist auf ihrem Umfang in Abständen zueinander angeordnete Druckelemente auf, wobei zwischen den Druckelementen jeweils ein Freiraum gebildet wird. Die Druckelemente können als Druckbleche ausgebildet sein und auf dem Tragring der Druckrolle mittels einer Schweißnaht befestigt sein. Damit weist die Druckrolle eine Umfangsfläche auf, welche nicht durchgängig bzw. nicht kontinuierlich ausgebildet ist. Aufgrund der Anordnung der Druckbleche und des dadurch gebildeten Freiraums zwischen den Druckblechen, kann sich auf der Umfangsfläche der Druckrolle kein durchgehender Erdring bilden. Stattdessen fällt die anhaftende Erde von den Druckblechen ab, wenn die Druckrolle auf dem Boden abrollt, so dass kein Abstreifer benötigt wird, um die Erde abzustreifen. Damit braucht die Druckrolle auch keine Umfangsfläche, welche aus einem harten Material gebildet ist. Mittels der in der zitierten EP-Anmeldung beschriebenen Vorrichtung soll erreicht werden, die auszubringenden Körner genauer im Boden zu positionieren bzw. zu dosieren. Dabei erfolgt mittels der Druckrolle weder ein Fangen noch ein Andrücken der Körner in den Boden.

Durch die EP 2 982 229 A1 ist eine weitere Saatgutandruckrolle offenbart, bei welcher ein speichenartiges Ringelement bzw. ein Reifen auf einem Radkörper bzw. auf einer Felge montiert ist. Der Radkörper umfasst ein Lager und ist durch zwei Flansche gebildet. Der Reifen kann aus einem einzigen und/oder aus mehreren Materialien ausgebildet sein. Wahlweise kann das Ringelement bzw. Abschnitte des Ringelements durch ein gummiartiges Material mit einem unterschiedlichen Härtegrad ausgebildet sein.

Der Erfindung liegt somit die Aufgabe zugrunde, eine Saatgutandruckrolle ohne die Nachteile des Standes der Technik zu schaffen. Diese Aufgabe wird erfindungsgemäß durch die Merkmale des Patentanspruchs 1 gelöst. Merkmale vorteilhafter Weiterbildungen der Erfindung ergeben sich aus den jeweils abhängigen Ansprüchen.

Zur Lösung der Aufgabe schlägt die Erfindung eine Saatgutandruckrolle vor, welche in landwirtschaftlichen Maschinen, wie Sämaschinen und/oder Einzelkornsämaschinen, Verwendung findet. Bei derartigen Maschinen ist in der Regel eine Vielzahl von Säscharen angeordnet, mittels welchen das jeweils auszubringende Saat- bzw. Verteilgut in den Boden abgelegt wird. Die Säschare besitzen zunächst Säfurchen ziehende Werkzeuge, wie Sechscheiben, Zinken oder dergl. In diese Säfurchen wird anschließend über Saatrohre und Leitungen das jeweils auszubringende Saatgut befördert, wobei dieses Saatgut bspw. mittels Dosiervorrichtungen vereinzelt und mit großer Geschwindigkeit befördert werden kann. Dem Ausgang des Saatrohrs nachgeordnet ist eine erfindungsgemäße Saatgutandruckrolle. Mittels dieser soll zum einen ein Verrollen bzw. Verspringen des Saatguts in der Säfurche verhindert werden und zum anderen das Saatgut im Boden leicht angedrückt bzw. in den Boden eingebettet werden, bevor dieses anschließend mittels diversen weiteren Werkzeugen in den Boden gedrückt und die Säfurche verschlossen wird.

Die Saatgutandruckrolle ist über einen ersten im Wesentlichen aus einer Felge gebildeten Abschnitt drehbar an einem Säschar oder einem Rahmenelement der landwirtschaftlichen Maschine montierbar. Hierzu können der Felge ein Lagerelement und ein Montagebolzen oder dergl. zugeordnet sein, wobei der Montagebolzen bzw. auch Teil des Säschar sein könnte. Beim Lager kann es sich bspw. um ein Kugellager oder um eine Gleitlagerung handeln. Auch andere Lager-Möglichkeiten wären denkbar. Die Felge ist vorzugsweise aus einem Kunststoffmaterial gebildet und kann sowohl ein- oder mehrteilig zusammengesetzt sein.

An den Umfang der Felge schließt ein aus einem elastischen bzw. flexiblen Material gebildetes Felgenblatt. Das Felgenblatt kann hierbei bspw. als einwandiges Element gebildet sein oder auch als aus wenigstens zwei Seitenwände aufweisendes Element mit einem durch die Seitenwände gebildeten Hohlraum. Das Felgenblatt ist aus Gummimaterial und/oder Kunststoffmaterial gebildet.

Wiederum an die Felge schließt an deren Umfang ein weitgehend formstabiles Ringelement an, welches Ringelement als Lauffläche der Saatgutandruckrolle dient. Die Ringfläche ist aus einem metallischen Werkstoff gebildet. Das Ringelement weist als Lauffläche eine plane bzw. ebene Fläche auf. Es wären jedoch auch bogenförmige Laufflächen denkbar.

Die erfindungsgemäße Saatgutandruckrolle setzt sich somit im Wesentlichen aus drei Abschnitten zusammen:
- einen ersten Abschnitt, welcher zur Lagerung und Montage der Saatgutandruckrolle dient,
- einen zweiten Abschnitt, welcher durch dessen flexible Ausgestaltung dem Schutz vor Beschädigungen, insbesondere bei Steinschlägen oder dergl., dient, wodurch keine weiteren federnden Aufhängungen oder dergl. benötigt werden,
- einen dritten Abschnitt, welcher die Lauffläche der Saatgutandruckrolle bildet und welcher aus einem formstabilen Material gefertigt ist, um von diesem mittels geeigneten Werkzeugen und Elementen an diesem sich anhaftende Erde beseitigen zu können.

Die Abschnitte das Felgenblatt und die Felge können bspw. durch Vulkanisation gemeinsam verbunden werden. Auch könnten die drei Abschnitte gemeinsam verschraubt sein. Ebenso denkbar wäre es, dass an diesen Montagewulste oder Aufnahmen vorgesehen sind, durch welche die Abschnitte ebenso zusammengesetzt sein können. Ebenso könnten die Elemente gemeinsam vergossen sein oder gemeinsam verklebt sein.

Durch die erfindungsgemäße Saatgutandruckrolle wird somit eine Vielzahl von aus dem Stand der Technik bekannten Nachteile beseitigt. So muss die Saatgutandruckrolle durch das flexible Felgenblatt nicht mehr federnd oder beweglich am Säschar montiert werden, da auf das Ringelement einwirkende Stöße und Schläge durch dieses kompensiert werden können. Weiter kann durch die formstabile Ausgestaltung des Ringelements, aus metallischen Werkstoffen, eine exaktere Anordnung von Abstreifwerkzeugen erfolgen als bspw. bei aus Gummi oder elastischen geformten Laufflächen. Ebenso haben metallische Laufflächen den Vorteil, dass diese keine Kanten oder Nähte oder dergl., welche bspw. durch ein Spritzwerkzeug oder dergl. entstanden sind, vorhanden sind. Ebenso hat sich in der Praxis gezeigt, dass an metallischen Laufflächen generell weniger Erde anhaften bleibt als an nicht metallischen Laufflächen. Insbesondere weist die Lauffläche keine Nähte oder Kanten in Fahrrichtung, also in Abrollrichtung der Saatgutandruckrolle, auf, sondern lediglich bei einem aus einem metallischen Werkstoff gebildeten Ringelement eine Naht quer zur Fahrrichtung bzw. quer zur Abrollrichtung, welche bspw. durch Schweißen oder Löten oder dergl. entstanden sein kann.

Es kann insbesondere vorgesehen sein, dass die Lauffläche nahtlos ausgebildet ist, was durch geeignete Fertigungsverfahren sicherzustellen ist. Der Vorteil einer solchen nahtlosen Lauffläche ist neben der verbesserten Fertigungsqualität die Vermeidung nachteiliger Grate oder Entformungsspuren, an denen im späteren Betrieb Erdreich anhaften kann, was jedoch nicht erwünscht ist.

Das Ringelement und das Felgenblatt sind aus verschiedenen Materialien gebildet. In einem nicht erfindungsgemäßen Beispiel wäre es jedoch denkbar, das Ringelement und das Felgenblatt jeweils aus dem gleichen Material zu fertigen, welche jedoch unterschiedliche Elastizitäten und Festigkeiten aufweisen. Erfindungsgemäß ist das Felgenblatt jedoch aus einem Gummimaterial sowie das Ringelement aus einem metallischen Werkstoff gebildet. In diesem Zusammenhang kann es vorteilhafterweise vorgesehen sein, dass das Ringelement eine abweichende, insbesondere eine geringere Elastizität als das Felgenblatt aufweist.

Um ausreichende Ausweichmöglichkeiten für die Saatgutandruckrolle durch das Felgenblatt zu erreichen, weist dieses mindestens eine Höhe auf, welche dem doppelten der Breite der Lauffläche entspricht.

Es kann vorgesehen sein, dass das Ringelement und das Felgenblatt unlösbar verbunden sind, was bspw. durch ein mehrphasiges Fertigungsverfahren realisierbar ist, wobei bspw. das Felgenblatt in einem ersten Fertigungsschritt hergestellt werden kann, wonach das Ringelement in einem weiteren Formgebungsschritt um das Felgenblatt herum angebracht und in seine Form gebracht werden kann, wodurch eine unlösbare Verbindung ausgebildet werden kann.

Das Felgenblatt kann auf verschiedenste Art und Weise gestaltet sein. So kann dieses bspw. scheibenartig geformt sein. Auch wäre es vorstellbar, dass dieses zwei Seitenwände aufweist, welche derartig zueinander angeordnet sind, dass diese einen Hohlraum bilden. Das Felgenblatt kann hierbei jeweils ein- oder mehrteilig zusammengesetzt sein. Die Seitenwände des Felgenblattes könnten sich verändernde Wandstärken aufweisen. Auch könnten diese jeweils konisch zueinander verlaufen. So können diese bspw. zunächst im Bereich der Felge in etwa die Breite der Felge aufweisen, können sich dann konisch aufweiten und am Übergang zum Ringelement deren größte Breite aufweisen. Durch die sich verändernden Wandstärken des Felgenblatts sowie dem konischen Verlauf können somit bspw. die Vorspannkräfte, welche von der Saatgutandruckrolle auf die Lauffläche wirken, variiert werden. Es kann wahlweise auch vorgesehen sein, dass das Felgenblatt Speichen aufweist oder dass es mit mehreren Durchbrüchen in seiner Seitenfläche zwischen Nabe und der Lauffläche versehen ist.

Der Übergang zwischen dem Felgenblatt und dem Ringelement ist vorzugsweise jeweils geschlossen, so dass keine Erde durch evtl. Freiräume von der Saatgutandruckrolle hochgeschaufelt wird und somit die Verstopfungsanfälligkeit steigen würde. In einer derartigen Ausgestaltungsform weist das Felgenblatt in der Regel einen Hohlraum auf und besitzt am Übergang zum Ringelement die weitgehend gleiche Breite wie dieses.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt in einer schematischen Perspektivansicht eine Ausführungsvariante einer Saatgutandruckrolle mit scheibenartigen Felgenblatt und Ringelement.
Fig. 1B zeigt in einer schematischen Perspektivansicht eine Ausführungsvariante einer Saatgutandruckrolle mit einem scheibenartigen und Speichen aufweisenden Felgenblatt und Ringelement.
Fig. 1C zeigt in einer schematischen Perspektivansicht eine Ausführungsvariante einer Saatgutandruckrolle mit einen weitgehend die gleiche Breite wie ein Ringelement und einen Hohlraum aufweisenden Felgenblatt.
Fig. 2A zeigt in einer Schnittdarstellung eine Ausführungsvariante einer Saatgutandruckrolle mit einem scheibenartigen Felgenblatt und Ringelement.
Fig. 2B zeigt in einer Schnittdarstellung eine Ausführungsvariante einer Saatgutandruckrolle mit einem Hohlraum aufweisenden Felgenblatt und einem Ringelement.
Fig. 2C zeigt in einer Schnittdarstellung eine Ausführungsvariante einer Saatgutandruckrolle mit einem Hohlraum aufweisenden Felgenblatt und einem Ringelement.

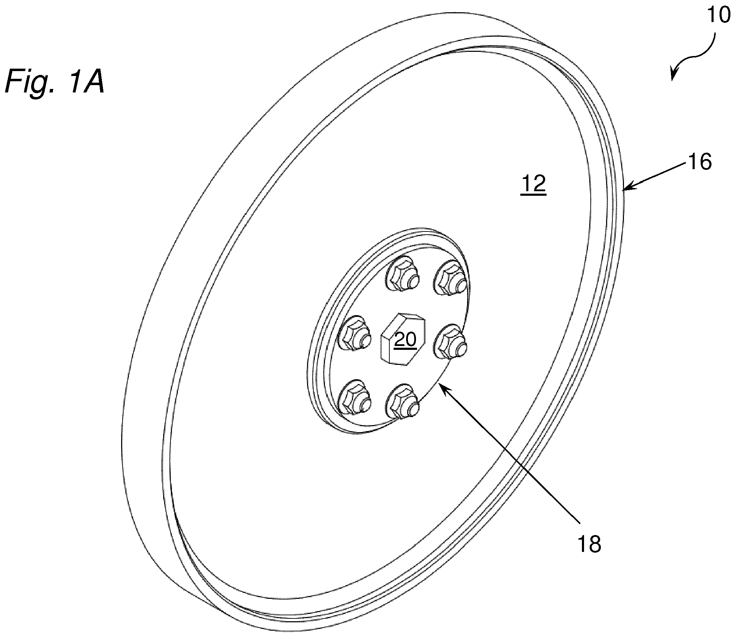

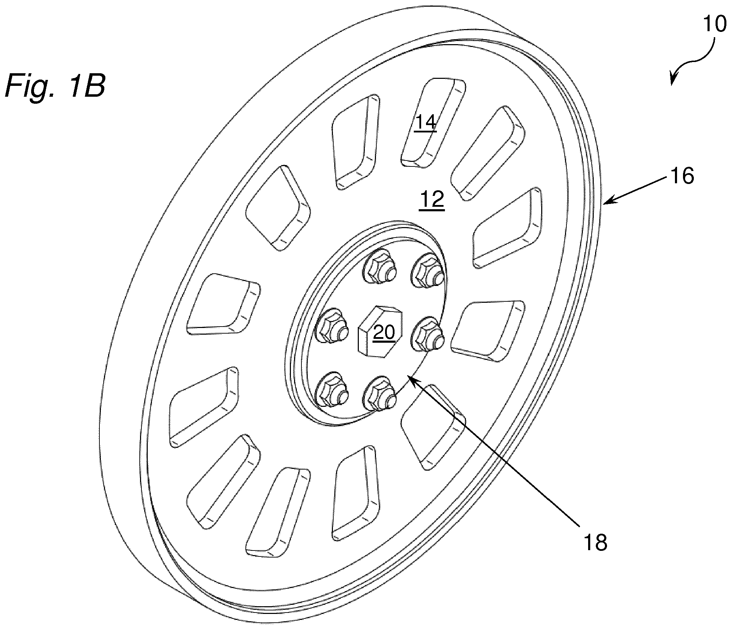

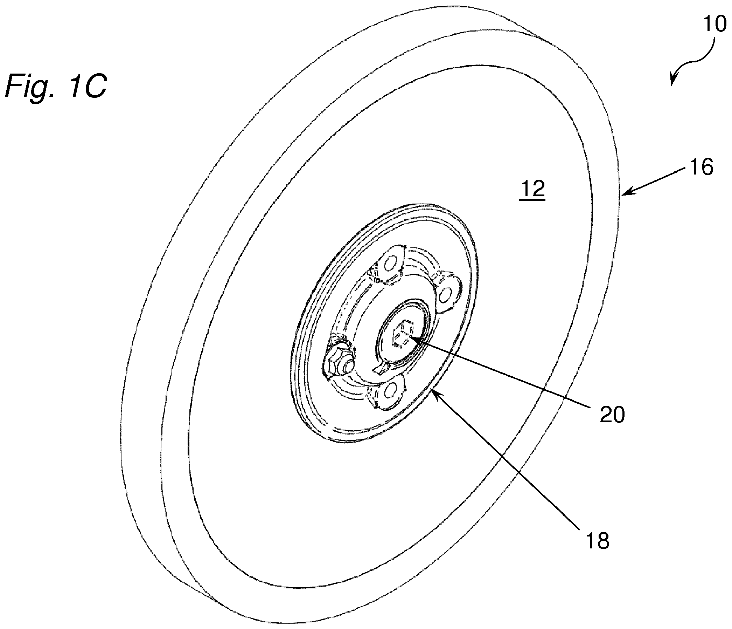

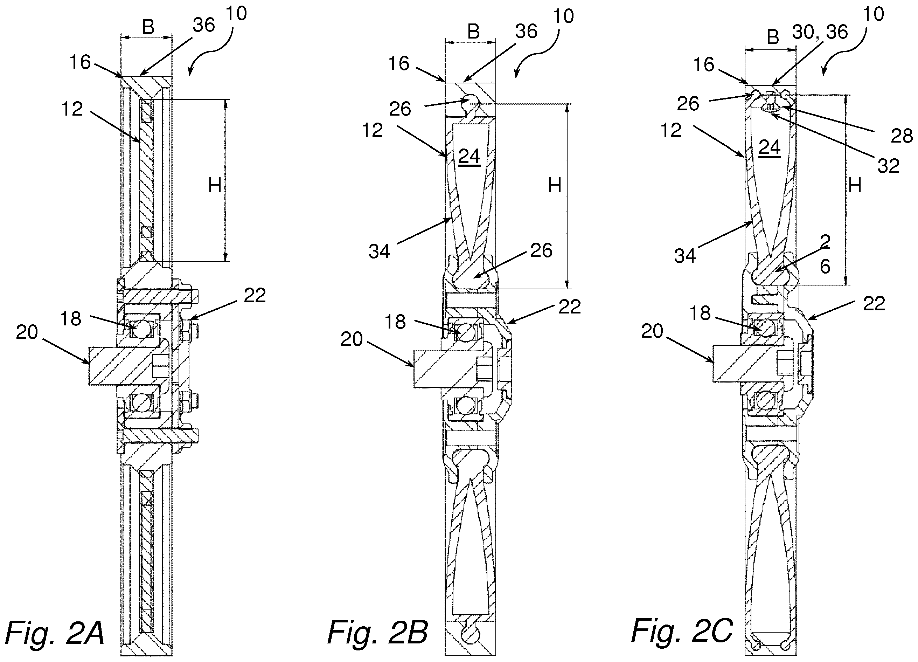

Für gleiche oder gleich wirkende Elemente der Erfindung werden in den Figuren 1 und 2 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Saatgutandruckrolle ausgestaltet sein kann und stellen keine abschließende Begrenzung dar.

Die Fig. 1 zeigt in drei schematischen Perspektivansichten drei verschiedene Ausführungsformen von erfindungsgemäßen Saatgutandruckrollen 10, wobei die Fig. 1A ein scheibenartiges Felgenblatt 12, die Fig. 1B ein Felgenblatt 12 mit Speichen 14 und die Fig. 1C ein Felgenblatt 12 mit einem Hohlraum und mit einer weitgehend gleichen Breite wie ein an dieses anschließendes Ringelement 16 offenbaren. Derartige Saatgutandruckrollen 10 finden in landwirtschaftlichen Sämaschinen bzw. Säscharen, insbesondere in Verbindung mit Einzelkorndosiersystemen, Verwendung. Mittels derartigen Säscharen werden in der Regel zunächst Säfurchen gebildet. In diese Säfurchen wird anschließend das jeweils auszubringende Saatgut mittels Saatrohren bzw. Saatleitungen oder dergl. befördert. Den Saatrohren nachgeordnet und in den Säfurchen laufend sind jeweils erfindungsgemäße Saatgutandruckrollen 10. Mittels dieser soll das Saatgut zum einen abgebremst und ein Verrollen in der Saatfurche unterbunden werden. Darüber hinaus soll das Saatgut in den Boden gedrückt bzw. in dieses eingebettet werden.

Um sich an der Saatgutandruckrolle 10 anhaftenden Boden abstreifen zu können, weist diese ein weitegehend formstabiles Ringelelement 16 auf. Weiter besitzt die Saatgutandruckrolle 10 ein scheibenartiges oder hohlraumbildendes sowie aus einem elastischen bzw. flexiblen Material gebildetes Felgenblatt 12. Durch eine derartige elastische Verformbarkeit des Felgenblatts 12 sind keine sich beweglichen oder verformbare Aufhängungsvorrichtungen oder dergl. nötig, wodurch der teileaufwand am Säschar wesentlich verringert werden kann. Wirken Steinschläge, Stöße oder dergl. auf die Saatgutandruckrolle 10, werden diese durch die elastische Ausgestaltung des Felgenblatts 12 jeweils weitgehend kompensiert.

Die Saatgutandruckrollen 10 der Figuren 1A bis 1C weisen jeweils ein Lager 18 mit einem durch dieses hindurchgeführten Montagebolzen 20 auf, mittels welchem die Saatgutandruckrolle 10 drehbar an einer Rahmenkonstruktion des Säschar bzw. der landwirtschaftlichen Maschine montiert werden kann. Das Lager 18 ist von einer Felge 22 umgeben, in welche das Felgenblatt 12 mündet. Am äußeren Umfang des Felgenblatts 12 schließt schließlich ein aus einem weitgehend formstabilen Material gefertigtes Ringelement 16 an.

Weitere Details der erfindungsgemäßen Saatgutandruckrolle 10 gehen aus den Figuren 2A bis 2C hervor, wobei hierbei die Saatgutandruckrolle 10 jeweils in einer Schnittansicht von vorne dargestellt wird. Die Saatgutandruckrolle 10 kann über einen Montagebolzen 20 und ein Lager 18 jeweils drehbar an einem hier nicht dargestellten Säschar montiert werden, wobei das Lager 18 hierzu wiederum in einer sich als Teil der Saatgutandruckrolle 10 angebrachten Felge 22 montiert ist. Wiederum am Außenumfang der Felge 22 schließt ein Felgenblatt 12 an, wobei das Felgenblatt 12 im Ausführungsbeispiel der Fig. 1A scheibenartig gebildet ist und wobei das Felgenblatt 12 in den Ausführungsbeispielen der Figuren 1B und 1C jeweils einen Hohlraum 24 aufweist.

Das Felgenblatt 12 kann jeweils Montageelemente 26 aufweisen, mittels derer diese jeweils zum einen, an der vorzugsweise zweiteilig gebildeten Felge 22 und zum anderen an einem das Felgenblatt 12 umgebenen Ringelement 16 montiert werden kann. Auch dieses Ringelement 16 kann wiederum zweiteilig gebildet sein (vergl. Fig. 2C) und sich aus einer Innenschale 28 und einer Außenschale 30 zusammensetzen, welche zwei Schalen 28; 30 wiederum bspw. mittels Schrauben 32 verbunden werden können. Auch wäre es vorstellbar, dass die Innenschale 28 und die Außenschale 30 mit Rastelementen oder dergl. verbunden werden können. Die Montageelemente 26 können insbesondere wulstartig ausgeformt sein, um somit eine Formschlussverbindung mit der Felge 22 und dem Ringelement 16 zu erreichen. Auch könnten das Felgenblatt 12 und das Ringelement 16 bzw. die Felge 22 jeweils gemeinsam verschraubt werden.

Das Felgenblatt 12 weist gemäß der Figuren 2B und 2C ausgehend von der Felge 22 in Richtung des Ringelements konisch verlaufende Seitenwände 34 auf, welche die maximale Breite am Übergang zum Ringelement 16 erreichen. Somit kann erreicht werden, dass bei auftretender Belastung auf das Ringelement 16 die Saatgutandruckrolle 10 nicht ausbricht, sondern das diese sich nach außen wölben und somit die Saatgutandruckrolle 10 weitgehend stabil bleibt und lediglich einfedert. In den Ausführungsbeispielen der Figuren 2B und 2C erreichen die Seitwände 34 deren maximale Breite unmittelbar vor dem Ringelement 16. Es wäre jedoch auch vorstellbar, dass diese die maximale Breite im Bereich zwischen der Felge 22 und dem Ringelement 16 erreichen. Durch die jeweils weitgehend gleiche Breite des Felgenblatts 12 und des Ringelements16 entsteht somit ein fast nahtloser Übergang, wodurch wiederum erreicht wird, dass durch das Ringelement 16 keine Erde oder dergl. mitbefördert wird.

Das Ringelement 16 besitzt jeweils eine ebene bzw. plane Lauffläche 36, wodurch die Positionierung eines Abstreiferwerkzeugs erleichtert werden kann. Es wären jedoch auch andere Formen denkbar, insbesondere bogenförmige oder dergl., wobei bei einer derartigen Ausgestaltung ebenfalls das Abstreiferwerkzeug an diese Form angepasst werden muss.

Die Seitenwände 34 können sich verändernde Materialdicken aufweisen, wobei diese sowie das Felgenblatt 12, insbesondere aus einem elastischen, flexiblen Material wie Gummi, Kunststoff oder dergl. gebildet sind. Ebenso ist das Ringelement 16 vorzugsweise aus einem zumindest weitgehend formstabilen Material wie bspw. Federblech oder dergl. gebildet.

Wie aus den Figuren 2B und 2C ersichtlich ist, ist der Übergang der Seitenwände 34 des Felgenblatts 22 zum Ringelement 16 weitgehend geschlossen, so dass durch evtl. Kanten oder dergl. ein Hochschaufeln von Erde vermieden werden kann.

Um ausreichende Ausweichmöglichkeiten und Federeigenschaften für die Saatgutandruckrolle 10 durch das Felgenblatt 12 zu erreichen, weist dieses mindestens eine Höhe H auf, welche wenigstens dem doppelten der Breite B der Lauffläche 36 entspricht.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Saatgutandruckrolle
- 12: Felgenblatt
- 14: Speiche
- 16: Ringelement
- 18: Lager
- 20: Montagebolzen
- 22: Felge
- 24: Hohlraum
- 26: Montageelement
- 28: Innenschale
- 30: Außenschale
- 32: Schraube
- 34: Seitenwände
- 36: Lauffläche

## Patentansprüche

1. Saatgutandruckrolle (10) zur Verwendung in einer landwirtschaftlichen Sä- und/oder Einzelkornmaschine mit einem Säfurchen ziehenden Säschar oder Werkzeug sowie Saatgut zu den Säfurchen fördernden Leitungen und/oder Rohren und einer diesen nachgeordneten Saatgutandruckrolle (10), wobei die Saatgutandruckrolle (10) eine ein Lager (18) aufnehmende Felge (22) aufweist, an welche Felge (22) sich ein scheibenartiges oder einen hohlraumbildendes sowie aus einem elastischen bzw. flexiblen Material gefertigtes Felgenblatt (12) anschließt, wobei am Umfang des Felgenblatts (12) ein weitgehend formstabiles Ringelement (16) angebracht ist, wobei der Umfang des Ringelements (16) die Lauffläche (36) der Saatgutandruckrolle (10) bildet, wobei das Felgenblatt (12) aus Gummimaterial und/oder Kunststoffmaterial gebildet ist, **dadurch gekennzeichnet, dass** das Ringelement (16) aus einem metallischen Werkstoff gebildet ist.

2. Saatgutandruckrolle nach Anspruch 1, **dadurch gekennzeichnet, dass** das Felgenblatt (12) eine Höhe (H) aufweist, welche wenigstens dem doppelten der Breite (B) der Lauffläche (36) entspricht.

3. Saatgutandruckrolle nach einem der vorhergehenden Ansprüche, **dadurch gekennzeichnet, dass** zumindest die Felge (22) und das Felgenblatt (12) oder das Felgenblatt (12) und das Ringelement (16) aus verschiedenen Materialien gefertigt sind.

4. Saatgutandruckrolle nach einem der vorhergehenden Ansprüche, **dadurch gekennzeichnet, dass** die Lauffläche (36) keine Naht oder Kante in Fahrtrichtung aufweist.

5. Saatgutandruckrolle nach einem der vorhergehenden Ansprüche, **dadurch gekennzeichnet, dass** die Lauffläche (36) nahtlos gefertigt ist.

6. Saatgutandruckrolle nach einem der vorhergehenden Ansprüche, **dadurch gekennzeichnet, dass** das Felgenblatt (12) und das Ringelement (16) an dessen Übergang die weitgehend gleiche Breite aufweisen.

7. Saatgutandruckrolle nach einem der vorhergehenden Ansprüche, **dadurch gekennzeichnet, dass** zumindest das Ringelement (16) und das Felgenblatt (12) unlösbar verbunden sind.

8. Saatgutandruckrolle nach einem der vorhergehenden Ansprüche, **dadurch gekennzeichnet, dass** das Felgenblatt (12) die Vorspannkräfte des Ringelements (16) bzw. der Lauffläche (36) definiert.

9. Saatgutandruckrolle nach einem der vorhergehenden Ansprüche, **dadurch gekennzeichnet, dass** das Felgenblatt (12) zwei Seitenwände (34) aufweist, welche in der Felge (22) und im Ringelement (16) angebracht sind.

10. Saatgutandruckrolle nach einem der vorhergehenden Ansprüche, **dadurch gekennzeichnet, dass** das Felgenblatt (12) Speichen (14) aufweist.

11. Saatgutandruckrolle nach einem der vorhergehenden Ansprüche, **dadurch gekennzeichnet, dass** das Ringelement (16) eine abweichende, insbesondere geringere Elastizität als das Felgenblatt (12) aufweist.

12. Saatgutandruckrolle nach einem der vorhergehenden Ansprüche, **dadurch gekennzeichnet, dass** diese wenigstens drei Abschnitte aufweist:
- einen ersten Abschnitt gebildet durch eine Felge (22) mit zumindest einem Lager (18),
- einen zweiten Abschnitt, welcher ein flexible Ausgestaltung aufweist, welche insbesondere durch ein scheibenartiges oder eines hohlraumbildendes sowie aus einem elastischen bzw. flexiblen Material gefertigten Felgenblatts (12) erreicht wird,
- einen dritten Abschnitt, mit einem Ringelement (16), welches die Lauffläche (36) der Saatgutandruckrolle (10) bildet und welches aus einem formstabilen Material gefertigt ist.

## Claims

1. A seed-firming wheel (10) to be used in an agricultural sowing machine and/or single-grain sowing machine with a sowing coulter or an implement that makes seed furrows, as well as with tubes and/or pipes that convey seeds to the seed furrows, and with a seed-firming wheel (10) arranged downstream thereto; wherein the seed-firming wheel (10) has a wheel rim (22) that accommodates a bearing (18), with a disc-type or a cavity-forming rim disc (12) that is manufactured from an elastic or, as the case may be, from a flexible material connecting to said wheel rim (22); wherein a largely dimensionally stable ring element (16) is attached to the circumference of the rim disc (12); wherein the circumference of the ring element (16) forms the tread (36) of the seed-firming wheel (10); wherein the rim disc (12) is formed from rubber material and/or synthetic material; **characterised in that** the ring element (16) is formed from a metallic material.

2. The seed-firming wheel according to claim 1, **characterised in that** the rim disc (12) has a height (H) that corresponds to at least double the width (B) of the tread (36).

3. The seed-firming wheel according to one of the previous claims, **characterised in that** at least the wheel rim (22) and the rim disc (12) or the rim disc (12) and the ring element (16) are manufactured from different materials.

4. The seed-firming wheel according to one of the previous claims, **characterised in that** the tread (36) has no seam or edge in driving direction.

5. The seed-firming wheel according to one of the previous claims, **characterised in that** the tread (36) is manufactured without seams.

6. The seed-firming wheel according to one of the previous claims, **characterised in that** the rim disc (12) and the ring element (16) have substantially the same width at the transition to the ring element (16).

7. The seed-firming wheel according to one of the previous claims, **characterised in that** at least the ring element (16) and the rim disc (12) are inseparably connected.

8. The seed-firming wheel according to one of the previous claims, **characterised in that** the rim disc (12) defines the preload forces of the ring element (16) or of the tread (36), as the case may be.

9. The seed-firming wheel according to one of the previous claims, **characterised in that** the rim disc (12) has two side walls (34), which are attached in the wheel rim (22) and in the ring element (16).

10. The seed-firming wheel according to one of the previous claims, **characterised in that** the rim disc (12) has spokes (14).

11. The seed-firming wheel according to one of the previous claims, **characterised in that** the ring element (16) has a different, in particular a smaller, elasticity than the rim disc (12).

12. The seed-firming wheel according to one of the previous claims, **characterised in that** said seed-firming wheel has at least three sections:
- a first section formed by a wheel rim (22) with at least one bearing (18);
- a second section having a flexible design that is achieved, in particular, by a disc-type or a cavity-forming rim disc (12) manufactured from an elastic or, as the case may be, from a flexible material;
- a third section, with a ring element (16) that forms the tread (36) of the seed-firming wheel (10) and that is manufactured from a dimensionally stable material.

## Revendications

1. Roue plombeuse (10) destinée à une utilisation dans un semoir et/ou un semoir monograine agricoles, dotée d'un soc pour semoir ou d'un outil traçant des sillons ainsi que de conduites et/ou tuyaux acheminant des semences vers les sillons et d'une roue plombeuse (10) agencée en aval de ces conduites et/ou tuyaux, ladite roue plombeuse (10) présentant une jante (22) sur laquelle est monté un roulement (18), un plein de jante (12) en matériau élastique ou souple et en forme de disque ou formant un espace creux venant se joindre à ladite jante (22), un élément annulaire (16) sensiblement de forme stable étant fixé sur le périmètre dudit plein de jante (12), ledit périmètre dudit élément annulaire (16) formant la surface de roulement (36) de la roue plombeuse (10), ledit plein de jante (12) étant en matériau de caoutchouc et/ou en matière plastique, **caractérisée en ce que** ledit élément annulaire (16) est en matériau métallique.

2. Roue plombeuse selon la revendication 1, **caractérisée en ce que** le plein de jante (12) présente une hauteur (H) qui correspond au moins au double de la largeur (B) de la surface de roulement (36).

3. Roue plombeuse selon l'une quelconque des revendications précédentes, **caractérisée en ce qu'**au moins la jante (22) et le plein de jante (12), ou le plein de jante (12) et l'élément annulaire (16) sont réalisés dans des matériaux différents.

4. Roue plombeuse selon l'une quelconque des revendications précédentes, **caractérisée en ce que** la surface de roulement (36) ne présente aucune couture ou aucun chant dans le sens de marche.

5. Roue plombeuse selon l'une quelconque des revendications précédentes, **caractérisée en ce que** la surface de roulement (36) est réalisée sans couture.

6. Roue plombeuse selon l'une quelconque des revendications précédentes, **caractérisée en ce que** le plein de jante (12) et l'élément annulaire (16) présentent, au passage de ce dernier, une largeur sensiblement égale.

7. Roue plombeuse selon l'une quelconque des revendications précédentes, **caractérisée en ce qu'**au moins l'élément annulaire (16) et le plein de jante (12) sont assemblés de manière permanente.

8. Roue plombeuse selon l'une quelconque des revendications précédentes, **caractérisée en ce que** le plein de jante (12) définit les forces de précontrainte de l'élément annulaire (16) ou de la surface de roulement (36).

9. Roue plombeuse selon l'une quelconque des revendications précédentes, **caractérisée en ce que** le plein de jante (12) présente deux parois latérales (34) qui sont fixées dans la jante (22) et dans l'élément annulaire (16).

10. Roue plombeuse selon l'une quelconque des revendications précédentes, **caractérisée en ce que** le plein de jante (12) présente des rayons (14).

11. Roue plombeuse selon l'une quelconque des revendications précédentes, **caractérisée en ce que** l'élément annulaire (16) présente une élasticité différente, notamment moindre par rapport à celle du plein de jante (12).

12. Roue plombeuse selon l'une quelconque des revendications précédentes, **caractérisée en ce que** ladite roue plombeuse présente au moins trois sections :
- une première section formée par une jante (22) dotée d'au moins un roulement (18),
- une deuxième section qui a une forme flexible, laquelle est notamment atteinte via un plein de jante (12) en forme de disque ou formant un espace creux ainsi que réalisé en matériau élastique ou souple,
- une troisième section dotée d'un élément annulaire (16) qui constitue la surface de roulement (36) de la roue plombeuse (10) et qui est réalisé en matériau de forme stable.
